# FASCICULE DE BREVET EUROPEEN

(11) **EP 2 490 144 B1**
(45) Date de publication et mention de la délivrance du brevet: **12.08.2020**
(21) Numéro de dépôt: 12155170.9
(22) Date de dépôt: 13.02.2012
(51) Int. Cl.: G06F 21/00, G06F 15/78, G06F 9/38

(54) **Circuit intégré programmable de cryptographie**
Für Kryptografie programmierbarer integrierter Schaltkreis
Programmable cryptography integrated circuit

(30) Priorité: 18.02.2011 FR 1151332
(43) Date de publication de la demande: 22.08.2012
(73) Titulaire: Bull S.A.S., 78340 Les Clayes-sous-Bois (FR)
(72) Inventeur: Le Quéré, Patrick, 91140 Villebon sur Yvette (FR)
(74) Mandataire: Bonnet, Michel

(56) Documents cités:
- EP-A2- 0 601 907
- WO-A1-99/39475
- US-A1- 2004 030 907
- US-A1- 2004 225 885
- WANG Y ET AL: "A unified architecture for a public key cryptographic coprocessor", JOURNAL OF SYSTEMS ARCHITECTURE, ELSEVIER BV, NL, vol. 54, no. 10, 1 octobre 2008 (2008-10-01), pages 1004-1016, XP024099926, ISSN: 1383-7621, DOI: 10.1016/J.SYSARC.2008.04.013 [extrait le 2008-04-30]
- J. Greathouse: "Processors with On-Die Cryptography Accelerators", , 13 avril 2007 (2007-04-13), pages 1-13, XP002661040, University of Michigan, EECS Department Extrait de l'Internet: URL:http://www.eecs.umich.edu/~jlgreath/pd fs/on_chip_crypto.pdf [extrait le 2011-10-11]

## Description

La présente invention concerne un circuit intégré de cryptographie. Plus précisément, elle porte sur un circuit intégré comportant un processeur principal programmable d'exécution de fonctions de cryptographie, une mémoire interne et un bus de transmission de données auquel sont raccordés électriquement le processeur principal et la mémoire interne.

Elle s'applique notamment aux domaines de la génération ou transmission sécurisée de données à l'aide de modules matériels sécurisés de type HSM (de l'Anglais « Hardware Security Module ») ou à travers des réseaux sécurisés par chiffrement de type VPN (de l'Anglais « Virtual Private Network »). Dans ces domaines, des circuits intégrés embarquant des fonctions de cryptographie asymétrique basées sur des calculs arithmétiques modulaires sont généralement utilisés.

Les principales fonctions de cryptographie connues sont par exemple :
- l'algorithme RSA (de l'Anglais « Rivest Shamir Adleman »), basé sur une opération d'exponentiation modulaire,
- la famille d'algorithmes ECC (de l'Anglais « Elliptic Curve Cryptography »), basé sur le principe du logarithme discret sur courbes elliptiques mettant en œuvre une opération de multiplication scalaire, cette dernière faisant appel aux principales opérations arithmétiques modulaires d'addition, soustraction, multiplication et inversion,
- l'algorithme Diffie-Helmann, basé sur le principe du logarithme discret sur des entiers mettant en œuvre l'opération d'exponentiation modulaire,
- l'algorithme probabiliste de primalité Rabin-Miller, basé sur l'opération d'exponentiation modulaire.

Elles sont mises en œuvre par des protocoles de sécurité tels que le protocole SSL (de l'Anglais « Secure Sockets Layer ») ou IKE (de l'Anglais « Internet Key Exchange »).

Les trois caractéristiques majeures que doit optimiser un circuit intégré de cryptographie sont :
- sa capacité à supporter un grand nombre de protocoles et donc d'algorithmes de cryptographie, ce qui le contraint d'implémenter les principales fonctions standard de l'arithmétique modulaire : addition, soustraction, multiplication, division, réduction, inversion, exponentiation et multiplication scalaire,
- ses performances en termes de nombre d'opérations de protocole qu'il peut effectuer par seconde : par exemple, le nombre de transactions SSL par seconde ou encore le nombre d'échanges de clés IKE par seconde, ces performances étant directement liées au nombre d'opérations arithmétiques sous-jacentes qu'il peut exécuter par seconde,
- sa résistance à différentes attaques visant à découvrir des données secrètes utilisées lors de l'exécution d'un algorithme de cryptographie : par exemple les attaques de type SPA (de l'Anglais « Simple Power Analysis ») ou DPA (de l'Anglais « Differential Power Analysis ») consistant à mesurer les courants et tensions entrants et sortants du circuit intégré.

En ce qui concerne cette troisième caractéristique à optimiser, le circuit intègre de préférence une implémentation spécifique des algorithmes de cryptographie, généralement qualifiée de contre-mesure, qui est mise en œuvre au détriment cependant de ses performances.

Une première solution pour optimiser au moins en partie ces caractéristiques consiste à concevoir des circuits intégrés matériellement spécialisés, dits circuits ASIC (de l'Anglais « Application-Specific Integrated Circuit »). Ces circuits sont conçus sur mesure : ils présentent l'avantage d'un coût de production réduit, d'un contrôle total des fonctions implémentées et de performances élevées puisque les fonctions qu'ils supportent sont câblées sur circuit. En revanche, cela se fait au prix d'un développement long et coûteux qui ne peut être amorti que sur un marché capable d'absorber de grandes quantités de circuits intégrés produits, tels que le marché américain par exemple.

En Europe au contraire, les volumes produits étant moins importants et les moyens d'investissements plus réduits, une seconde solution est adoptée, sur la base d'une technologie de circuits intégrés programmables, par exemple la technologie FPGA (de l'Anglais « Field-Programmable Gate Array ») mettant en œuvre un processeur principal programmable associé à une mémoire interne. Cette seconde solution prévoit d'associer le processeur principal programmable du circuit FPGA à des circuits intégrés spécifiques et de déporter certaines fonctions de cryptographie normalement effectuées par le processeur principal, telles que la multiplication modulaire, l'exponentiation ou même la multiplication scalaire, vers ces circuits intégrés dédiés matériellement à ces fonctions. Ces circuits dédiés sont appelés accélérateurs matériels. Bien que cette solution permette d'accélérer les performances du circuit FPGA, les accélérateurs matériels doivent être changés dès que l'on souhaite faire de la contre-mesure. De plus, un placement-routage du circuit intégré est rendu nécessaire lorsque l'on change le microcode exécuté par le processeur principal. Par placement-routage, on entend le processus lors duquel les différentes parties d'un circuit intégré sont automatiquement positionnées et connectées.

En technologie FPGA, une solution purement logicielle par programmation du processeur principal ne serait en outre pas envisageable, parce que les processeurs de circuits FPGA sont généralement des processeurs à 32 bits fonctionnant à des fréquences inférieures à 200 MHz, ce qui rendrait une telle solution particulièrement lente. En outre, une mise en parallèle de plusieurs processeurs dans un même circuit FPGA, bien qu'envisageable dans l'absolu, serait rapidement limitée à cause d'une mémoire interne insuffisante. Il faudrait alors faire appel à une mémoire vive externe.

Le document US 2004/0225885 A1 divulgue un circuit intégré comportant un CPU, un crypto coprocesseur et une interface couplant le CPU et le crypto coprocesseur. Le crypto coprocesseur peut partager l'accès mémoire avec le CPU. Il décrit en outre que le crypto coprocesseur peut comprendre plusieurs unités, chacune spécialisée pour réaliser un type spécifique de traitement cryptographique, tel qu'un traitement DES, un traitement AES, des fonctions de hachage, des fonctions de génération de clés. Ces unités sont matérielles et peuvent être une machine à état.

L'article de Wang et al, intitulé « A unified architecture for a public key cryptographic coprocessor », publié dans Journal of Systems Architecture, Elsevier BV, NL, volume 54, n° 10, pages 1004-1016, 1er octobre 2008, décrit un coprocesseur cryptographique de génération d'une clé publique, comportant une unité arithmétique qui peut supporter des opérations modulaires double-champ comportant la multiplication modulaire, l'addition/soustraction modulaire et l'inversion modulaire. Il est relié à un bus.

Il peut ainsi être souhaité de prévoir un circuit intégré de cryptographie qui permette de s'affranchir d'au moins une partie des problèmes et contraintes précités.

L'invention a donc pour objet un circuit intégré de cryptographie comportant un processeur principal programmable d'exécution de fonctions de cryptographie, une mémoire interne et un bus de transmission de données auquel sont raccordés électriquement le processeur principal et la mémoire interne, caractérisé en ce qu'il comporte en outre, raccordé également électriquement au bus de transmission de données et différent du processeur principal, un coprocesseur arithmétique programmable comportant des unités arithmétiques spécifiques matérielles, chacune de ces unités arithmétiques spécifiques matérielles étant conçue pour réaliser une opération arithmétique prédéterminée.

Ainsi, les opérations arithmétiques sous-jacentes à toutes les fonctions de cryptographie mises en œuvre par le processeur principal du circuit intégré programmable sont accélérées grâce à la présence de ces unités arithmétiques matérielles et une partie des calculs programmables faisant intervenir ces opérations arithmétiques peut être déportée du processeur principal vers le coprocesseur arithmétique qui est lui-même programmable. Il est alors possible de décharger réellement le processeur principal du circuit intégré tout en assurant à la fois une accélération des calculs et une souplesse d'implémentation. En particulier, il devient possible de personnaliser l'implémentation de chaque algorithme de cryptographie pour échapper aux attaques SPA, DPA ou autres sans pour autant imposer un placement-routage du circuit intégré à chaque changement d'implémentation. Enfin, la mémoire interne du circuit intégré peut être moins sollicitée et il n'est plus nécessaire non plus de prévoir une mémoire vive externe.

De façon optionnelle, l'architecture matérielle de chaque unité arithmétique spécifique matérielle du coprocesseur arithmétique est conçue pour réaliser des opérations sur des nombres codés en binaire dans des mots d'au moins 128 bits, dits « grands nombres ».

Avantageusement, le coprocesseur arithmétique programmable comporte au moins une unité arithmétique matérielle d'addition modulaire, une unité arithmétique matérielle de multiplication modulaire par réduction de Montgomery et une unité arithmétique matérielle d'opération logique modulaire.

Avantageusement également, l'architecture matérielle d'au moins l'unité arithmétique matérielle d'addition modulaire ou l'unité arithmétique matérielle de multiplication modulaire par réduction de Montgomery est conçue pour réaliser des opérations arithmétiques modulaires en mode pipeline et pour retourner, d'une part, plusieurs valeurs possibles d'une même opération arithmétique demandée et, d'autre part, un paramètre de sélection d'une unique valeur parmi ces plusieurs valeurs possibles.

Une accélération supplémentaire est ainsi rendue possible, au prix d'une sollicitation plus importante d'espace mémoire.

De façon optionnelle également, le coprocesseur arithmétique programmable comporte un registre de statut de sortie comprenant un espace de stockage dudit paramètre de sélection.

De façon optionnelle également, le coprocesseur arithmétique programmable comporte en outre :
- un séquenceur programmable raccordé électriquement à chacune des unités arithmétiques spécifiques matérielles et intégrant lui-même des unités arithmétiques supplémentaires,
- une interface d'entrées/sorties raccordable au bus de transmission de données,
- un ordonnanceur de commandes s'interfaçant entre l'interface d'entrées/sorties et le séquenceur programmable, et
- une mémoire locale raccordée électriquement au séquenceur programmable et à chacune des unités arithmétiques spécifiques matérielles.

De façon optionnelle également, l'architecture matérielle de chaque unité arithmétique supplémentaire intégrée dans le séquenceur programmable est conçue pour réaliser des opérations sur des nombres codés en binaire dans des mots d'au plus 64 bits.

De façon optionnelle également, le séquenceur programmable comporte en outre un contrôleur d'exécution de microprogrammes, une mémoire de microcode et une pluralité de registres parmi lesquels un registre de commande d'entrée accessible en écriture par l'ordonnanceur de commandes et un registre de statut de sortie accessible en lecture par l'ordonnanceur de commandes.

De façon optionnelle également, la mémoire de microcode comporte des instructions de programmes pour réaliser, à l'aide des unités arithmétiques spécifiques matérielles et des unités arithmétiques supplémentaires, au moins l'une des opérations de l'ensemble constitué d'une multiplication modulaire, d'une exponentiation modulaire, d'un calcul d'inverse modulaire, d'une division modulaire et d'une multiplication scalaire sur courbe elliptique.

De façon optionnelle également, le processeur principal programmable et le coprocesseur arithmétique programmable sont conçus pour échanger selon une interface de programmation prévoyant qu'au moins une partie d'une pluralité de commandes de calcul arithmétique adressées au coprocesseur arithmétique programmable par le processeur principal comporte un champ d'indication si le paramètre de modularité d'un calcul arithmétique modulaire est conservé ou non par rapport à un calcul précédent.

Grâce à cette option, certains calculs préalables à certaines opérations arithmétiques dépendant de ce paramètre de modularité peuvent être évités lorsque ce dernier ne varie pas d'un calcul à l'autre.

L'invention sera mieux comprise à l'aide de la description qui va suivre, donnée uniquement à titre d'exemple et faite en se référant aux dessins annexés dans lesquels :
- la figure 1 représente schématiquement la structure générale d'un circuit intégré de cryptographie selon un mode de réalisation de l'invention,
- la figure 2 détaille schématiquement la structure du séquenceur d'un coprocesseur arithmétique programmable du circuit intégré de cryptographie de la figure 1, et
- la figure 3 détaille la structure d'un ensemble de mémoire locale et d'unités arithmétiques matérielles du coprocesseur arithmétique programmable du circuit intégré de cryptographie de la figure 1.

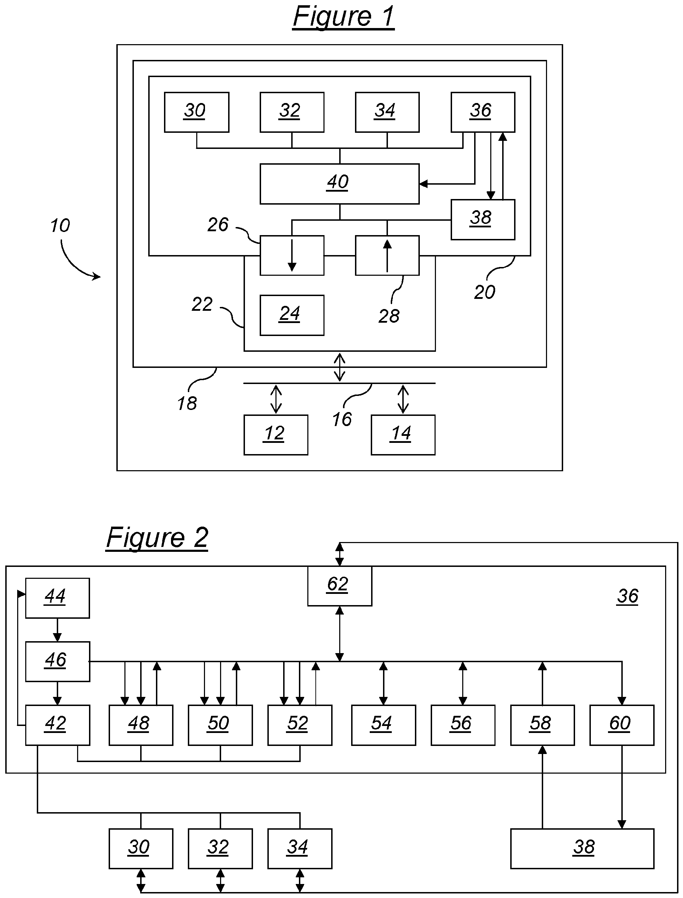

Le circuit intégré de cryptographie 10 illustré sur la figure 1 comporte un processeur principal programmable 12 d'exécution de fonctions de cryptographie, une mémoire interne 14 et un bus 16 de transmission de données auquel sont raccordés électriquement le processeur principal 12 et la mémoire interne 14.

Il comporte en outre un coprocesseur arithmétique programmable 18, différent du processeur principal 12, également raccordé électriquement au bus 16 de transmission de données.

Le processeur principal 12 et le coprocesseur arithmétique programmable 18 échangent des données par l'intermédiaire d'une interface de programmation API (de l'Anglais « Application Programming Interface ») constituée de commandes et de statuts implémentés dans la mémoire interne 14 qui se présente par exemple sous la forme d'une mémoire partagée de type DPRAM (de l'Anglais « Dual Ported Random Access Memory »). Afin de décharger le processeur principal 12, les commandes qu'il émet pour le coprocesseur programmable 18 sont des macro-instructions arithmétiques portant sur des opérandes entiers codés en binaire dans des mots d'au moins 128 bits, par exemple de 128 à 4096 bits : ces opérandes sont qualifiés de « grands nombres ». Les commandes peuvent être de deux types :
- des commandes d'opérations arithmétiques modulaires élémentaires (additions, soustractions, multiplications, ...) permettant au processeur principal 12 de sous traiter les opérations de base tout en continuant à implémenter les opérations complexes de cryptographie, telles que la multiplication scalaire ou l'exponentiation, ou
- des commandes d'opérations arithmétiques modulaires complexes (multiplication scalaire, exponentiation, inversion, ...) permettant de décharger complètement le processeur principal 12 de ces fonctions de cryptographie.

A cet effet, le coprocesseur arithmétique programmable 18 comporte un cœur de traitement 20 et une interface d'entrées/sorties 22 destinée à raccorder le cœur de traitement 20 au bus 16. L'interface 22 comporte ainsi un contrôleur DMA 24 à deux canaux pour le transfert simultané de données depuis ou vers une mémoire extérieure au cœur de traitement, par exemple la mémoire interne 14. Elle comporte en outre deux mémoires tampon de type FIFO (de l'Anglais « First In First Out »), l'une 26 pour la transmission de données du cœur de traitement 20 vers l'extérieur du coprocesseur arithmétique programmable 18, l'autre 28 pour la transmission de données en sens inverse.

Le cœur de traitement 20 comporte plusieurs unités arithmétiques spécifiques matérielles 30, 32 et 34 conçues pour réaliser des opérations arithmétiques prédéterminées. Elles se présentent chacune sous la forme d'un circuit intégré dédié câblé dont l'architecture matérielle est destinée à toujours réaliser la même opération de base. Ainsi par exemple, l'unité arithmétique matérielle 30 est une unité d'addition modulaire portant sur des grands nombres, réalisant des additions/soustractions modulaires sur des opérandes codés en binaire dans des mots de 128 à 8192 bits. L'unité arithmétique matérielle 32 est une unité de multiplication modulaire portant sur des grands nombres, réalisant par exemple des multiplications modulaires par réduction de Montgomery sur des opérandes codés en binaire dans des mots de 128 à 4096 bits. Enfin, l'unité arithmétique matérielle 34 est une unité d'opération logique modulaire portant sur des grands nombres, réalisant des opérations de logique modulaire (décalages, comparaisons, ...) sur des opérandes codés en binaire dans des mots de 128 à 4096 bits.

On note qu'il est prévu que l'unité 30 d'addition modulaire sur grands nombres soit apte à traiter des mots deux fois plus longs que ceux traités par l'unité 32 de multiplication modulaire sur grands nombres, parce que lorsque des multiplications modulaires par réduction de Montgomery sont réalisées sur N bits, cela implique nécessairement l'exécution de quelques opérations additions/soustractions sur 2N bits.

Le cœur de traitement 20 comporte en outre un séquenceur programmable 36 raccordé électriquement à chacune des unités arithmétiques spécifiques matérielles 30, 32 et 34 par des liaisons fil à fil. Il peut lui-même inclure des unités arithmétiques matérielles supplémentaires comme cela sera vu ultérieurement en référence à la figure 2, l'architecture matérielle de chaque unité arithmétique supplémentaire intégrée dans le séquenceur programmable 36 pouvant être conçue pour réaliser, en complément des opérations arithmétiques réalisées par les unités arithmétiques spécifiques matérielles 30, 32 et 34, des opérations sur des nombres codés en binaire dans des mots d'au plus 64 bits. Le séquenceur programmable 36 traite les commandes (ou macro-instructions) émises par le processeur principal 12 et fournit ses résultats et statuts à l'aide d'un jeu d'instructions, par exemple programmé en assembleur et destiné à être compilé. Ces instructions sont classiques et ne seront pas détaillées. Elles peuvent être modifiées et recompilées sans qu'un placement-routage du processeur principal 12 dans le circuit intégré 10 ne soit requis.

Le cœur de traitement 20 comporte en outre un ordonnanceur de commandes 38 s'interfaçant entre les deux mémoires tampon 26, 28 de l'interface d'entrées/sorties 22 et le séquenceur programmable 36. L'ordonnanceur de commandes 38 reçoit et gère la synchronisation des commandes émises par le processeur principal 12 ; il gère en outre la transmission des résultats et statuts fournis par le séquenceur programmable 36.

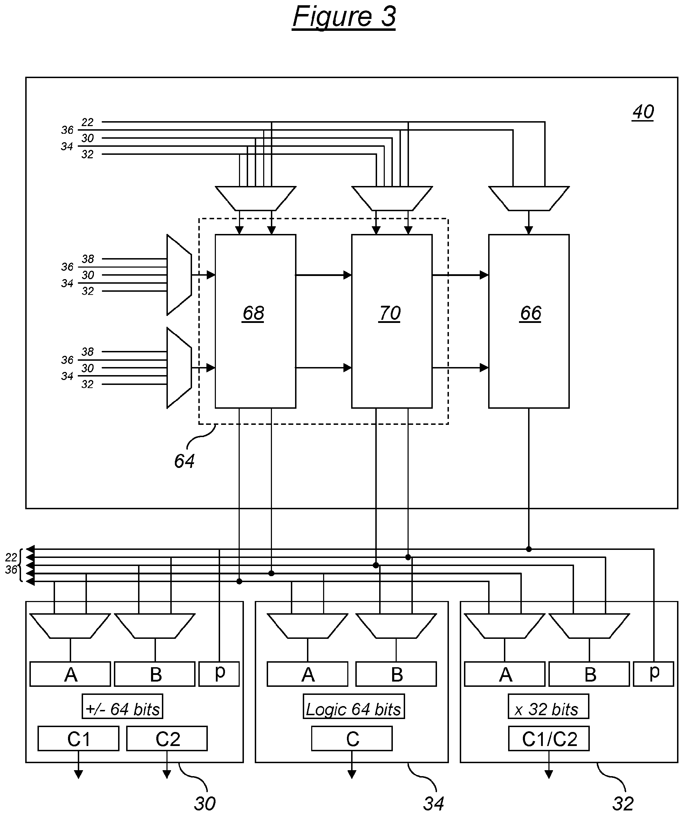

Enfin, le cœur de traitement 20 comporte une mémoire locale 40 raccordée électriquement à l'ordonnanceur de commandes 38, au séquenceur programmable 36 et à chacune des unités arithmétiques spécifiques matérielles 30, 32 et 34. Cette mémoire locale 40, se présentant par exemple sous la forme d'une mémoire de type RAM (de l'Anglais « Random Access Memory »), stocke des opérandes de type « grands nombres » organisés en variables et en paramètres. Le nombre de variables pouvant être stockées dans cette mémoire locale 40 dépend bien sûr de la taille de la mémoire et des variables. Comme cela sera détaillé ultérieurement en référence à la figure 3, on admettra par exemple qu'une mémoire locale 40 permettant de stocker 2 variables de 4096 bits ou 22 variables de 521 bits suffit. Les paramètres des opérandes sont par exemple le modulo, des paramètres de courbe elliptique ou de multiplication scalaire, un coefficient d'exponentiation, des paramètres de multiplication modulaire par réduction de Montgomery, etc.

Les commandes reçues sous forme de macro-instructions par le coprocesseur arithmétique programmable 18, implémentées sous forme de microprogrammes dans le séquenceur programmable 36 à l'aide du jeu d'instructions précité, sont notamment les suivantes :
- l'addition modulo p de deux entiers A et B : C = A + B mod p, où A, B et p sont des entiers de 128 à 4096 bits,
- la soustraction modulo p de deux entiers A et B : C = A - B mod p, où A, B et p sont des entiers de 128 à 4096 bits,
- la multiplication modulo p de deux entiers A et B : C = A x B mod p, où A, B et p sont des entiers de 128 à 4096 bits,
- l'exponentiation modulo p d'un entier A par un entier B : C = A^{B} mod p, où A, B et p sont des entiers de 128 à 4096 bits,
- la multiplication scalaire d'un vecteur A(x,y) par un scalaire k modulo p : C = k.A mod p, où x, y, k et p sont des entiers de 128 à 521 bits,
- la réduction modulo p d'un entier A : C = A mod p, où A est un entier de 128 à 8192 bits et p un entier de 128 à 4096 bits,
- l'inversion modulo p d'un entier A : C = 1/A mod p, où A et p sont des entiers de 128 à 1024 bits, et
- la division modulo p de deux entiers A et B : C = A / B mod p, où A, B et p sont des entiers de 128 à 1024 bits.

L'interface d'entrées/sorties 22 du coprocesseur arithmétique programmable 18 exécute alors les tâches suivantes :
- attendre l'activation d'un signal de commande en provenance d'un processeur externe, en l'occurrence le processeur principal 12,
- aller chercher une commande dans une mémoire extérieure au coprocesseur 18, notamment la mémoire interne 14 du circuit 10, à l'aide du contrôleur DMA 24 pour la placer dans la mémoire tampon 28,
- aller chercher le ou les opérandes et le paramètre p de modulo d'une commande considérée, dans la mémoire interne 14 du circuit 10, à l'aide du contrôleur DMA 24 pour les placer dans la mémoire tampon 28,
- attendre que la mémoire tampon 26 contienne un résultat demandé pour le placer dans la mémoire interne 14 du circuit 10, et
- engendrer un signal d'acquittement de commande destiné au processeur principal 12.

L'ordonnanceur de commandes 38 du coprocesseur arithmétique programmable 18 exécute les tâches suivantes :
- lire une commande dans la mémoire tampon 28 et l'envoyer vers le séquenceur programmable 36 en faisant correspondre à chaque macro-instruction de la commande considérée l'adresse d'un microprogramme correspondant,
- lire le ou les opérandes et le paramètre p de modulo d'une commande considérée dans la mémoire tampon 28 et les écrire dans la mémoire locale 40,
- lancer une exécution du séquenceur programmable 36 pour le traitement d'une commande et attendre la fin de ce traitement, et
- transférer le résultat d'un traitement de la mémoire locale 40 vers la mémoire tampon 26.

Le fonctionnement du séquenceur programmable 36 va maintenant être détaillé sur la base d'une description des éléments qui le constituent et qui sont illustrés schématiquement sur la figure 2.

Il comporte tout d'abord un contrôleur 42 d'exécution de microprogrammes, un compteur de programme 44, par exemple sur 9 bits, et une mémoire de microcode 46, par exemple contenant 256 mots de 32 bits.

Il comporte en outre des unités arithmétiques matérielles supplémentaires 48, 50 et 52 conçues pour réaliser des opérations sur des nombres codés en binaire dans des mots d'au plus 64 bits. Elles se présentent chacune sous la forme d'un circuit intégré dédié câblé dont l'architecture matérielle est destinée à toujours réaliser la même opération de base. Ainsi par exemple, l'unité arithmétique matérielle 48 est une unité d'addition réalisant des additions/soustractions ou des incrémentations/décrémentations sur des opérandes codés en binaire dans des mots d'au plus 64 bits : chacune de ces opérations est effectuée en un cycle d'horloge. L'unité arithmétique matérielle 50 est une unité de multiplication réalisant par exemple des multiplications sur des opérandes codés en binaire dans des mots d'au plus 32 bits : chacune de ces multiplications est effectuée en un cycle d'horloge. Enfin, l'unité arithmétique matérielle 52 est une unité d'opération logique réalisant des opérations de logique (décalages à gauche ou à droite, tests de parité, négations, comparaisons, tests d'égalité) sur des opérandes codés en binaire dans des mots d'au plus 64 bits : chacune de ces opérations est effectuée en un cycle d'horloge.

Il comporte en outre un premier ensemble 54 de registres de 64 bits destiné à stocker temporairement des opérandes et résultats intermédiaires de calculs commandés par le contrôleur d'exécution 42. Cet ensemble 54 comporte par exemple deux registres d'opérandes sur 64 bits communs à l'ensemble des unités arithmétiques matérielles supplémentaires 48, 50 et 52, un registre d'opérande sur 8 bits spécifique à l'unité d'opération logique 52 (utilisé pour indiquer la valeur du décalage lorsque cette unité opère un décalage à gauche ou à droite), deux registres de résultats sur 64 bits pour les unités d'addition 48 et de multiplication 50 et un registre de résultats sur 128 bits pour l'unité d'opération logique 52.

Il comporte en outre un second ensemble 56 de n registres de 64 bits destiné à stocker des opérandes et résultats globaux respectivement en provenance et à destination de la mémoire locale 40 du coprocesseur arithmétique programmable 18. Ce second ensemble 56 est par exemple implémenté sous la forme d'une mémoire DPRAM de n mots de 64 bits pour le stockage ou la lecture en mode Burst, n étant configurable de 2 à 128.

Il comporte en outre un registre 58 de commande d'entrée accessible en écriture par l'ordonnanceur de commandes 38, destiné plus précisément à recevoir une macro-instruction placée par l'ordonnanceur de commandes 38, et un registre 60 de statut de sortie accessible en écriture par le contrôleur d'exécution 42 et en lecture par l'ordonnanceur de commandes 38 pour indiquer lorsqu'une macro-instruction a été exécutée.

Enfin, le contrôleur d'exécution 42, la mémoire de microcode 46, les unités arithmétiques matérielles supplémentaires 48, 50, 52 et les registres 54, 56, 58, 60 sont connectés à une unité 62 d'entrées/sorties vers la mémoire locale 40 du coprocesseur arithmétique programmable 18. Cette unité d'entrées/sorties 62 effectue des cycles de lectures et d'écritures de mots de 32 ou 64 bits en mode simple ou Burst à partir des ensembles de registres 54 et 56.

Le fonctionnement des unités arithmétiques spécifiques matérielles 30, 32 et 34 va maintenant être détaillé.

L'unité matérielle 30 d'addition modulaire sur grands nombres est conçue pour réaliser quatre types d'opérations entre deux grands nombres A et B, impliquant éventuellement un paramètre modulaire « p » : une addition simple entre A et B, une soustraction simple entre A et B, une addition modulo p entre A et B et une soustraction modulo p entre A et B. Le choix entre une opération simple et une même opération modulo p peut se faire selon la valeur binaire prise par un paramètre « mod » spécifié par le séquenceur programmable 36.

De façon astucieuse, les opérations d'addition et de soustraction peuvent être réalisées en mode pipeline, c'est-à-dire selon un mécanisme dans lequel, les opérations sur grands nombres se faisant par tranches de 64 bits, les lectures, opérations d'addition/soustraction et stockages s'effectuent sur ces tranches à chaque cycle d'horloge. Ce mécanisme permet d'accroître la vitesse d'exécution des instructions dans le séquenceur programmable 36. En effet, ce dernier commence une nouvelle macro-instruction avant d'avoir fini la précédente. Plusieurs macro-instructions se trouvent donc simultanément en cours d'exécution par tranches de 64 bits. Le temps d'exécution d'une seule macro-instruction n'est pas réduit ; en revanche, le débit du séquenceur programmable 36, c'est-à-dire le nombre de macro-instructions exécutées par unité de temps, est augmenté.

L'architecture matérielle de l'unité d'addition modulaire 30 est par exemple conçue pour réaliser la séquence d'instructions suivante, lorsqu'une addition est demandée :

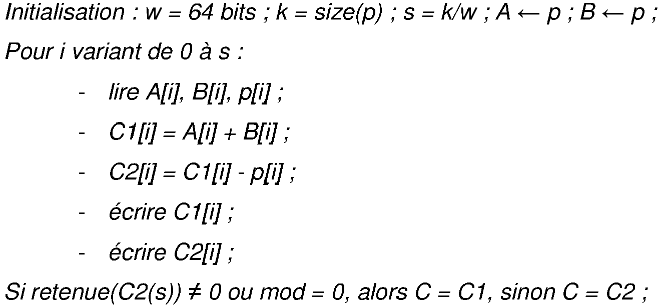

Dans cette séquence d'instructions qui comporte une boucle sur un indice i : la fonction size() renvoie la taille, en nombre de bits, du mot entré en paramètre et la fonction retenue() renvoie la valeur de la retenue de l'addition. En pratique, retenue(C2(s)) = 0 si C1 ≥ p et retenue(C2(s)) ≠ 0 si C1 < p. Dans ce cas, concrètement le séquenceur programmable 36 fournit progressivement et parallèlement les deux résultats possibles C1 et C2 de l'addition, le bon résultat ne pouvant être sélectionné qu'en fin de boucle à l'aide du test de retenue. Selon ce mode de réalisation, le séquenceur programmable 36 fournit donc à la mémoire locale 40, progressivement, les deux résultats C1, C2 et, en fin de boucle, un bit de statut indiquant lequel de ces deux résultats est le bon en fonction de l'opération demandée. Au prix d'une occupation de place mémoire plus importante, le calcul d'addition est ainsi astucieusement accéléré. Le bit de statut est par exemple stocké par le séquenceur programmable 36 dans le registre de statut de sortie 60 pour être lu par l'ordonnanceur de commandes 38.

L'architecture matérielle de l'unité d'addition modulaire 30 est par exemple également conçue pour réaliser la séquence d'instructions suivante, lorsqu'une soustraction est demandée :

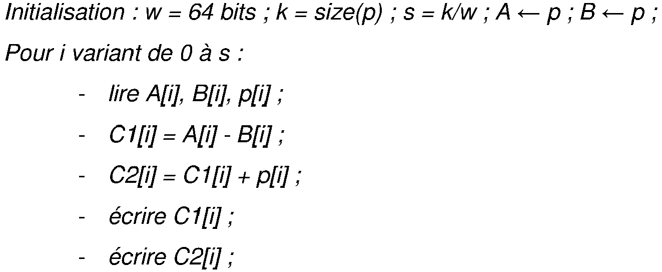

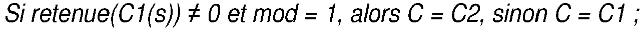

Dans ce cas, concrètement le séquenceur programmable 36 fournit progressivement et parallèlement les deux résultats possibles C1 et C2 de la soustraction, le bon résultat ne pouvant être sélectionné qu'en fin de boucle à l'aide du test de retenue. Selon ce mode de réalisation, le séquenceur programmable 36 fournit donc à la mémoire locale 40, progressivement, les deux résultats C1, C2 et, en fin de boucle, un bit de statut indiquant lequel de ces deux résultats est le bon en fonction de l'opération demandée. Au prix d'une occupation de place mémoire plus importante, le calcul de soustraction est ainsi également astucieusement accéléré.

L'unité matérielle 34 d'opération logique modulaire sur grands nombres est conçue pour réaliser deux types d'opérations entre deux grands nombres A et B et deux types d'opérations sur un grand nombre A : une comparaison entre A et B renvoyant un paramètre binaire dont la valeur est fonction de la comparaison, un test d'égalité entre A et B renvoyant un paramètre binaire dont la valeur est fonction de ce test et un décalage à droite des bits de A.

L'architecture matérielle de l'unité d'opération logique modulaire 34 est conçue, de façon connue en soi, pour réaliser ces quatre types d'opérations logiques.

L'unité matérielle 32 de multiplication modulaire sur grands nombres est conçue pour réaliser une multiplication par réduction de Montgomery modulo p entre deux grands nombres A et B. Son architecture matérielle est ainsi par exemple conçue pour réaliser la séquence d'instructions suivante, notée Montpro(A, B) :

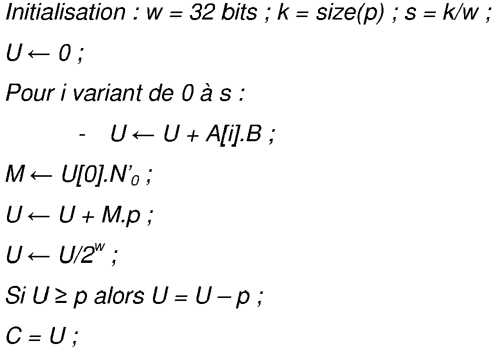

Dans cette séquence d'instructions, les multiplications A[i].B et M.p s'effectuent sur 32 bits. Le résultat est Montpro(A, B) = A.B.2^{-k} modulo p. Par ailleurs, N'₀ = -1/p[0] modulo 2^{w} et doit être calculé au préalable par microprogramme à chaque changement de paramètre p. Ce calcul de N'₀ est connu et ne sera pas détaillé.

De façon astucieuse également, l'opération de multiplication par réduction de Montgomery peut être réalisée en mode pipeline. Dans ce cas, concrètement le séquenceur programmable 36 fournit progressivement et parallèlement deux résultats possibles C1 et C2 de la multiplication par réduction de Montgomery, le bon résultat ne pouvant être sélectionné qu'en fin de boucle à l'aide d'un test de retenue. Selon ce mode de réalisation, le séquenceur programmable 36 fournit donc à la mémoire locale 40, progressivement, les deux résultats C1, C2 et, en fin de boucle, un bit de statut indiquant lequel de ces deux résultats est le bon. Au prix d'une occupation de place mémoire plus importante, le calcul de multiplication par réduction de Montgomery est ainsi également accéléré.

A l'aide des unités arithmétiques spécifiques matérielles 30, 32 et 34 détaillée ci-dessus, mais également des unités arithmétiques matérielles supplémentaires 48, 50, 52, d'autres opérations plus complexes peuvent être réalisées par microprogramme. Elles sont exécutées par le contrôleur d'exécution 42, les instructions de microprogramme correspondantes étant stockées dans la mémoire de microcode 46.

Une multiplication modulaire de A par B peut notamment être calculée par microprogramme et à l'aide de l'unité matérielle 32 de multiplication modulaire sur grands nombres, par exécution de la séquence d'instructions suivante :
*A* ←*Montpro(A, R2P) ;*
*B* ←*Montpro(B, R2P) ;*
*C* = *Montpro(A, B)* ;
*C ← Montpro(C, 1)*

Dans cette séquence d'instructions, R2P = 2^{2k} modulo p et doit être calculé au préalable par microprogramme à chaque changement de paramètre p. Ce calcul de R2P est connu et ne sera pas détaillé.

On peut également noter que cette séquence d'instructions devient, sous une forme optimisée :
*A* ←*Montpro(A, R2P) ;*
*C* = *Montpro(A, B) ;*

Au vu de ce qui précède, il peut être prévu dans certaines commandes adressées par le processeur principal 12 au coprocesseur arithmétique 18 et traitées par le séquenceur programmable 36, notamment toute commande de multiplication modulaire, un champ (par exemple un bit) indiquant si le paramètre modulaire p est conservé par rapport à une commande précédente ou non. Ainsi, si le paramètre p est conservé, le calcul préalable de N'₀ et R2P est inutile, ces paramètres pouvant être conservés en mémoire locale 40. Si le paramètre p est changé, alors il peut être chargé par le séquenceur programmable 36 avant les autres données de la commande considérée pour le calcul préalable des paramètres N'₀ et R2P.

Par exemple également, un calcul d'exponentiation modulaire peut être réalisé par microprogramme, sur la base de l'unité matérielle 32 de multiplication modulaire sur grands nombres. Plusieurs implémentations sont envisageables et ne seront pas détaillées car bien connues de l'homme du métier.

Par exemple également, un calcul d'inverse modulaire peut être réalisé par microprogramme, sur la base de l'ensemble des unités arithmétiques spécifiques matérielles 30, 32 et 34 sur grands nombres. Son implémentation est également bien connue et ne sera donc pas détaillée.

Par exemple également, un calcul de division modulaire peut être réalisé par microprogramme, sur la base de l'unité matérielle 32 de multiplication modulaire sur grands nombres et du calcul d'inverse modulaire précité. Son implémentation est également bien connue et ne sera donc pas détaillée.

Par exemple également, un calcul de multiplication scalaire sur courbe elliptique peut être réalisé par microprogramme, sur la base notamment de l'unité matérielle 30 d'addition modulaire sur grands nombres et de l'unité matérielle 32 de multiplication modulaire sur grands nombres. Ses implémentations possibles sont également bien connues et ne seront donc pas détaillées. Elles sont notamment fonction du choix de coordonnées retenu pour situer les points sur la courbe elliptique considérée. Or le choix d'un système de coordonnées est dicté par des critères de performance et de résistance aux attaques SPA/DPA. L'avantage de réaliser le calcul de multiplication scalaire de façon microprogrammée est donc de pouvoir changer d'implémentation sans conséquence sur l'architecture matérielle du circuit intégré de cryptographie 10 ni sur son placement-routage puisque le changement d'implémentation se fait par une simple relecture de la mémoire de microcode 46.

Un exemple de structure générale de la mémoire locale 40 du coprocesseur arithmétique 18 est illustré de façon schématique sur la figure 3.

La mémoire locale 40, dédiée notamment au stockage des opérandes de type « grands nombres » organisés en variables et en paramètres, comporte deux modules de stockage principaux. Un premier module 64 est réservé au stockage de n variables. Un second module 66 est réservé au stockage de paramètres, tels que des paramètres de courbe elliptique ou de multiplication scalaire, les paramètres N'° ou R2P précités intervenant dans la multiplication modulaire par réduction de Montgomery, un exposant d'exponentiation, le paramètre p de modulo, etc.

Le premier module 64 est lui-même scindé en deux sous-modules miroirs 68 et 70, nécessaires pour l'accès simultané en lecture aux variables des unités arithmétiques spécifiques matérielles 30, 32 et 34. En outre, le résultat fourni par une telle unité arithmétique pouvant se trouver sous deux formes possibles C1 et C2, chaque sous-module 68, 70 est lui-même scindé en deux blocs distincts (non illustrés) accessibles simultanément en écriture. La sélection du bon résultat se fait, comme indiqué précédemment, à l'aide du paramètre de statut fourni par l'unité arithmétique concernée en fin de calcul et stocké par le séquenceur programmable 36 dans son registre de statut de sortie 60. Pour des raisons d'optimisation de performance, la largeur des quatre blocs précités est de 64 bits.

En termes de taille totale nécessaire pour la mémoire locale 40, l'exécution microprogrammée d'une multiplication scalaire nécessite un espace de stockage d'environ 20 mots de 521 bits au maximum, soit au plus 20 mots de 9x64 bits ou 180 mots de 64 bits. Pour l'exécution de la multiplication modulaire précitée, il faut pouvoir disposer d'au maximum 1 mot de 8193 bits pour le calcul de R2P, soit 129 mots de 64 bits. Cet espace de stockage est également nécessaire pour la réduction modulaire qui nécessite le stockage simultané de 2 mots de 4096 bits chacun. Il faut ajouter à cela au moins un espace de stockage de 1 variable de 4096 bits, soit 64 mots de 64 bits, ce qui donne au total, 193 mots de 64 bits.

La taille de chaque bloc est donc fixée au minimum à 256 mots de 64 bits, soit 2 ko. Le premier module 64 est donc dimensionné à 8 ko, par exemple pour le stockage de 2 variables de 4096 bits ou 22 variables de 521 bits.

Pour le second module 66, il est nécessaire de disposer de suffisamment de place pour stocker le paramètre p, l'exposant de l'exponentiation, les paramètres N'⁰ ou R2P précités, la valeur 1 sur 4096 bits utilisée pour une étape de conversion entre le format de Montgomery et le format réel dans la réduction de Montgomery, soit un total de 4 mots de 4096 et un mot de 32 bits. Mais sachant que le paramètre N'⁰ et la valeur 1 sur 4096 bits peuvent partager successivement le même espace mémoire, il est nécessaire de prévoir 4x64 mots de 64 bits, soit 2 ko pour le second module 66.

Par conséquent, la mémoire locale 40 est dimensionnée à 10 ko.

Comme illustré sur la figure 3, le second module 66 et chaque sous-module 68, 70 du premier module 64 est accessible en lecture et/ou écriture par l'interface d'entrées/sorties 22, les unités arithmétiques spécifiques matérielles 30, 32 et 34, le séquenceur programmable 36 et l'ordonnanceur de commandes 38. Cet accès est, de façon classique, géré à l'aide de multiplexeurs.

Notamment :
- les données d'entrée des sous-modules 68 et 70 sont fournies par l'interface d'entrées/sorties 22, les unités arithmétiques spécifiques matérielles 30, 32 et 34 et le séquenceur programmable 36,
- les données d'entrée du second module 66 sont fournies par l'interface d'entrées/sorties 22 et le séquenceur programmable 36,
- deux accès supplémentaires indépendants sont fournis, au second module 66 et à chaque sous-module 68, 70 du premier module 64, vers l'ordonnanceur de commandes 38, le séquenceur programmable 36 et les unités arithmétiques spécifiques matérielles 30, 32 et 34.

Comme illustré également sur la figure 3, l'accès de chaque unité arithmétique spécifique matérielle 30, 32 et 34 à l'interface d'entrées/sorties 22, au séquenceur programmable 36 et à la mémoire locale 40 se fait également à l'aide de multiples liens gérés par multiplexeurs, l'unité matérielle d'addition sur grands nombres 30 devant recevoir deux opérandes A et B et un paramètre p pour la fourniture de deux résultats possibles C1 et C2, l'unité matérielle de multiplication sur grands nombres 32 devant recevoir deux opérandes A et B et un paramètre p pour la fourniture d'un résultat C, ou de deux résultats possibles C1 et C2, et l'unité matérielle d'opération logique sur grands nombres 34 devant recevoir deux opérandes A et B pour la fourniture d'un résultat C.

Il apparaît clairement qu'un circuit intégré de cryptographie tel que celui décrit précédemment permet d'accélérer le fonctionnement de son processeur principal en le déchargeant d'au moins une partie des calculs de cryptographie, tout en conservant une souplesse d'implémentation qui est nécessaire en contre-mesure et pour le développement de ce circuit à coût limité.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

## Revendications

1. Circuit intégré de cryptographie (10) comportant un processeur principal programmable (12) d'exécution de fonctions de cryptographie, une mémoire interne (14), un bus (16) de transmission de données auquel sont raccordés électriquement le processeur principal (12) et la mémoire interne (14), et, raccordé également électriquement au bus (16) de transmission de données et différent du processeur principal (12), un coprocesseur arithmétique programmable (18) comportant des unités arithmétiques spécifiques matérielles (30, 32, 34), parmi lesquelles au moins une unité arithmétique matérielle d'addition modulaire (30), une unité arithmétique matérielle de multiplication modulaire par réduction de Montgomery (32) et une unité arithmétique matérielle d'opération logique modulaire (34), chacune de ces unités arithmétiques spécifiques matérielles étant conçue pour réaliser une opération arithmétique prédéterminée, **caractérisé en ce que** l'architecture matérielle d'au moins l'unité arithmétique matérielle d'addition modulaire (30) ou l'unité arithmétique matérielle de multiplication modulaire par réduction de Montgomery (32) est conçue pour réaliser des opérations arithmétiques modulaires en mode pipeline et pour retourner, d'une part, plusieurs valeurs possibles d'une même opération arithmétique demandée et, d'autre part, un paramètre de sélection d'une unique valeur parmi ces plusieurs valeurs possibles.

2. Circuit intégré de cryptographie (10) selon la revendication 1, dans lequel l'architecture matérielle de chaque unité arithmétique spécifique matérielle (30, 32, 34) du coprocesseur arithmétique (18) est conçue pour réaliser des opérations sur des nombres codés en binaire dans des mots d'au moins 128 bits, dits « grands nombres ».

3. Circuit intégré de cryptographie (10) selon la revendication 1 ou 2, dans lequel le coprocesseur arithmétique programmable (18) comporte un registre de statut de sortie (60) comprenant un espace de stockage dudit paramètre de sélection.

4. Circuit intégré de cryptographie (10) selon l'une quelconque des revendications 1 à 3, dans lequel le coprocesseur arithmétique programmable (18) comporte en outre :
- un séquenceur programmable (36) raccordé électriquement à chacune des unités arithmétiques spécifiques matérielles (30, 32, 34) et intégrant lui-même des unités arithmétiques supplémentaires (48, 50, 52),
- une interface d'entrées/sorties (22) raccordable au bus (16) de transmission de données,
- un ordonnanceur de commandes (38) s'interfaçant entre l'interface d'entrées/sorties (22) et le séquenceur programmable (36), et
- une mémoire locale (40) raccordée électriquement au séquenceur programmable (36) et à chacune des unités arithmétiques spécifiques matérielles (30, 32, 34).

5. Circuit intégré de cryptographie (10) selon la revendication 4, dans lequel l'architecture matérielle de chaque unité arithmétique supplémentaire (48, 50, 52) intégrée dans le séquenceur programmable (36) est conçue pour réaliser des opérations sur des nombres codés en binaire dans des mots d'au plus 64 bits.

6. Circuit intégré de cryptographie (10) selon la revendication 4 ou 5, dans lequel le séquenceur programmable (36) comporte en outre un contrôleur (42) d'exécution de microprogrammes, une mémoire de microcode (46) et une pluralité de registres (54, 56, 58, 60) parmi lesquels un registre de commande d'entrée (58) accessible en écriture par l'ordonnanceur de commandes (38) et un registre de statut de sortie (60) accessible en lecture par l'ordonnanceur de commandes (38).

7. Circuit intégré de cryptographie (10) selon la revendication 6, dans lequel la mémoire de microcode (46) comporte des instructions de programmes pour réaliser, à l'aide des unités arithmétiques spécifiques matérielles 30, 32, 34) et des unités arithmétiques supplémentaires (48, 50, 52), au moins l'une des opérations de l'ensemble constitué d'une multiplication modulaire, d'une exponentiation modulaire, d'un calcul d'inverse modulaire, d'une division modulaire et d'une multiplication scalaire sur courbe elliptique.

8. Circuit intégré de cryptographie (10) selon la revendication 7, dans lequel le processeur principal programmable (12) et le coprocesseur arithmétique programmable (18) sont conçus pour échanger selon une interface de programmation prévoyant qu'au moins une partie d'une pluralité de commandes de calcul arithmétique adressées au coprocesseur arithmétique programmable (18) par le processeur principal (12) comporte un champ d'indication si le paramètre de modularité d'un calcul arithmétique modulaire est conservé ou non par rapport à un calcul précédent.

## Patentansprüche

1. Integrierter Schaltkreis für Kryptographie (10), aufweisend einen programmierbaren Hauptprozessor (12) für die Ausführung von Kryptographiefunktionen, einen internen Speicher (14), einen Datenübertragungsbus (16), an den der Hauptprozessor (12) und der interne Speicher (14) elektrisch angeschlossen sind, und, ebenfalls an den Datenübertragungsbus (16) elektrisch angeschlossen und unterschiedlich vom Hauptprozessor (12), einen programmierbaren arithmetischen Coprozessor (18), der spezifische materielle arithmetische Einheiten (30, 32, 34) aufweist, zu denen mindestens eine modulare materielle arithmetische Additionseinheit (30), eine modulare materielle arithmetische Multiplikationseinheit durch Montgomery-Reduktion (32) und eine modulare materielle arithmetische logische Operationseinheit (34) gehört, wobei jede dieser spezifischen materiellen arithmetischen Einheiten für die Durchführung einer vorher festgelegten arithmetischen Operation konzipiert ist, **dadurch gekennzeichnet, dass** die materielle Architektur mindestens der modularen materiellen arithmetischen Additionseinheit (30) oder der modularen materiellen arithmetischen Multiplikationseinheit durch Montgomery-Reduktion (32) zur Durchführung der modularen arithmetischen Operationen im Pipelinemodus konzipiert ist und um zum einen mehrere möglichen Werte derselben verlangten arithmetischen Operation und zum andern einen Auswahlparameter eines einzigen Wertes von diesen mehreren möglichen Werten zu liefern.

2. Integrierter Schaltkreis für Kryptographie (10) nach Anspruch 1, wobei die materielle Architektur jeder spezifischen materiellen arithmetischen Einheit (30, 32, 34) des arithmetischen Coprozessors (18) zur Durchführung der Operationen auf binär codierten Zahlen in Worten von mindestens 128 Bit, bezeichnet als "große Zahlen", konzipiert ist.

3. Integrierter Schaltkreis für Kryptographie (10) nach Anspruch 1 oder 2, wobei der programmierbare arithmetische Coprozessor (18) ein Ausgangsstatusregister (60) aufweist, das einen Speicherplatz des Auswahlparameters umfasst.

4. Integrierter Schaltkreis für Kryptographie (10) nach einem der Ansprüche 1 bis 3, wobei der programmierbare arithmetische Coprozessor (18) ferner aufweist:
- einen programmierbaren Sequenzer (36), der an jede der spezifischen materiellen arithmetischen Einheiten (30, 32, 34) elektrisch angeschlossen ist und selbst zusätzliche arithmetische Einheiten (48, 50, 52) integriert,
- eine Eingangs-/Ausgangsschnittstelle (22), die an den Datenübertragungsbus (16) anschließbar ist,
- ein Befehls-Scheduler (38), der eine Schnittstelle zwischen der Eingangs-/Ausgangsschnittstelle (22) und dem programmierbaren Sequenzer (36) bildet, und
- einen lokalen Speicher (40), der an den programmierbaren Sequenzer (36) und an jede der spezifischen materiellen arithmetischen Einheiten (30, 32, 34) elektrisch angeschlossen ist.

5. Integrierter Schaltkreis für Kryptographie (10) nach Anspruch 4, wobei die materielle Architektur jeder zusätzlichen arithmetischen Einheit (48, 50, 52), die in den programmierbaren Sequenzer (36) integriert ist, zur Durchführung der Operationen für binär codierte Zahlen in Worten von höchstens 64 Bit konzipiert ist.

6. Integrierter Schaltkreis für Kryptographie (10) nach Anspruch 4 oder 5, wobei der programmierbare Sequenzer (36) ferner einen Controller (42) für die Ausführung von Mikroprogrammen, einen Mikrocodespeicher (46) und einer Vielzahl von Registern (54, 56, 58, 60) aufweist, zu denen ein Eingangsbefehlsregister (58), das von dem Befehls-Scheduler (38) beschreibbar ist, und ein Ausgangsstatusregister (60), das von dem Befehls-Scheduler (38) lesbar ist, gehört.

7. Integrierter Schaltkreis für Kryptographie (10) nach Anspruch 6, wobei der Mikrocodespeicher (46) Programminstruktionen aufweist, um mit Hilfe der spezifischen materiellen arithmetischen Einheiten (30, 32, 34) und der zusätzlichen arithmetischen Einheiten (48, 50, 52) mindestens eine der Operationen der Gesamtheit durchzuführen, die von einer modularen Multiplikation, einer modularen Exponentiation, einer modularen inversen Berechnung, einer modularen Division und einer skalaren Multiplikation auf elliptischer Kurve gebildet ist.

8. Integrierter Schaltkreis für Kryptographie (10) nach Anspruch 7, wobei der programmierbare Hauptprozessor (12) und der programmierbare arithmetische Coprozessor (18) zum Austausch gemäß einer Programmierschnittstelle konzipiert sind, die vorsieht, dass mindestens ein Teil einer Vielzahl von arithmetischen Rechenbefehlen, die vom Hauptprozessor (12) an den programmierbaren arithmetischen Coprozessor (18) gesendet werden, ein Feld aufweist, das anzeigt, wenn der Modularitätsparameter einer modularen arithmetischen Berechnung in Bezug auf eine vorangegangene Berechnung beibehalten wird oder nicht.

## Claims

1. A cryptographic integrated circuit (10) comprising a programmable main processor (12) for executing cryptographic functions, an internal memory (14), a data transmission bus (16) to which the main processor (12) and the internal memory (14) are electrically connected, and, also electrically connected to the data transmission bus (16) and different from the main processor (12), a programmable arithmetic coprocessor (18) comprising specific hardware arithmetic units (30, 32, 34), among which at least one hardware arithmetic unit (30) for modular addition, one hardware arithmetic unit (32) for modular multiplication using Montgomery reduction, and one hardware arithmetic unit (34) for a modular logic operation, each of these specific hardware arithmetic units being designed to carry out a predetermined arithmetical operation, **characterized in that** the hardware architecture of at least the hardware arithmetic unit (30) for modular addition or the hardware arithmetic unit (32) for modular multiplication using Montgomery reduction is designed to carry out modular arithmetical operations in a pipeline mode and to return, on the one hand, several possible values from one and the same requested arithmetical operation and, on the second hand, a parameter for selecting a single value from said several possible values.

2. The cryptographic integrated circuit (10) according to claim 1, wherein the hardware architecture of each specific hardware arithmetic unit (30, 32, 34) in the arithmetic coprocessor (18) is designed to carry out operations on numbers that are binary-coded in words of at least 128 bits, called "large numbers".

3. The cryptographic integrated circuit (10) according to claim 1 or 2, wherein the programmable arithmetic coprocessor (18) comprises an output status register (60) comprising a storage space of said selection parameter.

4. The cryptographic integrated circuit (10) according to any one of claims 1 to 3, wherein the programmable arithmetic coprocessor (18) further comprises:
- a programmable sequencer (36) that is electrically connected to each of the specific hardware arithmetic units (30, 32, 34) and that integrates itself additional arithmetic units (48, 50, 52),
- an input/output interface (22) that can be connected to the data transmission bus (16),
- a command scheduler (38) that interfaces between the input/output interface (22) and the programmable sequencer (36), and
- a local memory (40) that is electrically connected to the programmable sequencer (36) and to each of the specific hardware arithmetic units (30, 32, 34).

5. The cryptographic integrated circuit (10) according to claim 4, wherein the hardware architecture of each additional arithmetic unit (48, 50, 52) integrated into the programmable sequencer (36) is designed to carry out operations on numbers that are binary-coded in words of at most 64 bits.

6. The cryptographic integrated circuit (10) according to claim 4 or 5, wherein the programmable sequencer (36) further comprises a controller (42) for executing microprograms, a microcode memory (46), and multiple registers (54, 56, 58, 60) including an input command register (58) that is writable by the command scheduler (38) and an output status register (60) that is readable by the command scheduler (38).

7. The cryptographic integrated circuit (10) according to claim 6, wherein the microcode memory (46) comprises program instructions for carrying out, using the specific hardware arithmetic units (30, 32, 34) and the additional arithmetic units (48, 50, 52), at least one of the operations from the set consisting of a modular multiplication, a modular exponentiation, a modular inverse calculation, a modular division, and an elliptic curve scalar multiplication.

8. A cryptographic integrated circuit (10) according to claim 7, wherein the programmable main processor (12) and the programmable arithmetic coprocessor (18) are designed to communicate according to a programming interface providing at least a portion of a set of arithmetic calculation commands sent to the programmable arithmetic coprocessor (18) by the main processor (12) containing a field to indicate whether the modularity parameter for a modular arithmetical calculation is maintained from a previous calculation.
